Europäisches Patentamt

European Patent Office

Office européen des brevets

(11) Publication number: **0 298 098 B1**

# EUROPEAN PATENT SPECIFICATION

(45) Date of publication of patent specification: **02.03.94**  (51) Int. Cl.5: **H01L 31/10**, **H01P 1/15**

(21) Application number: **88900731.6**

(22) Date of filing: **04.12.87**

(86) International application number:
**PCT/US87/03209**

(87) International publication number:
**WO 88/05212 (14.07.88 88/15)**

(54) **ULTRA HIGH-SPEED LIGHT ACTIVATED MICROWAVE SWITCH/MODULATOR USING PHOTOREACTIVE EFFECT.**

(30) Priority: **31.12.86 US 948339**

(43) Date of publication of application:
**11.01.89 Bulletin 89/02**

(45) Publication of the grant of the patent:
**02.03.94 Bulletin 94/09**

(84) Designated Contracting States:
**DE FR GB IT SE**

(56) References cited:
**US-A- 3 221 272**
**US-A- 3 502 884**
**US-A- 3 976 873**

**Solid-State Electronics, vol. 11, no. 2, February 1968, Pergamon Press, (Oxford, GB) ; T. Yamamoto et al. : "The gold n-type GaAs surface barrier diode and its application to photocapacitors", pages 219-224.**

(73) Proprietor: **Hughes Aircraft Company**
**7200 Hughes Terrace**
**P.O. Box 45066**
**Los Angeles, California 90045-0066(US)**

(72) Inventor: **DE LA CHAPELLE, Michael**
**22923 Cantlay Street**
**Canoga Park, CA 91307(US)**
Inventor: **HSU, Hui-Pin**
**20210 Elkwood**
**Canoga Park, CA 91306(US)**

(74) Representative: **Witte, Alexander, Dr.-Ing.**
**Witte, Weller, Gahlert & Otten**
**Patentanwälte**
**Augustenstrasse 14**
**D-70178 Stuttgart (DE)**

IEEE Transactions on Microwave Theory and Techniques, vol. MTT-27, no. 5, May 1979 (New York, US) ; R.A. Kiehl : "An avalanching optoelectronic microwave switch", pages 533-539.

IEEE Proceedings, vol. 132, part J, no. 2, April 1985 (Old Woking, GB) ; W. Platte : "Optoelectronic microwave switching", pages 126-132.

Patent Abstracts of Japan, vol. 2, no. 68, 24 May 1978, page 23 60 E 78 ; & JP-A-5333083

R.C.A, Review, vol. 46, no. 4, December 1985 (Princeton, US) ; P.R. Herczfeld et al. : "Optically controlled microwave devices and circuits", pages 528-551.

## Description

This invention relates to a microwave switch comprising:
- a semiconductor material defining a diode junction;
- a photoactive region on said semiconductor material, the reactance of said photoactive region being variable with optical illumination;
- a source of optical illumination directed toward said photoactive region to form a plasma region adjacent to said photoactive region.

A microwave switch of this kind, but for the example of an avalanche diode, is disclosed in R.A. Kiehl, "An Avalanching Optoelectronic Microwave Switch", IEEE Transactions on Microwave Theory and Techniques, Volume MTT-27, No. 5, May 1979, pp. 533 - 539.

The invention also relates to a corresponding microwave modulator, and to a method for altering, in particular switching or modulating, electromagnetic signals.

More particularly, the invention relates to a microwave switch/ modulator which is controlled by optical illumination from a laser light source or the like. The illumination causes variations in the reactance of the switch/ modulator photodiode, thereby detuning a resonant circuit, causing RF signals to be reflected rather than absorbed or transmitted.

High-speed RF and microwave switches are used in numerous applications. They are often used in radar receivers as blanking switches to protect sensitive circuitry from damage during the transmit pulse. Fast switching is necessary for this application in order to minimize the period of time in which the receiver is disabled after the transmit pulse has ended so the radar can detect close targets.

Heretofore, high-speed RF and microwave switches have employed optoelectronic microwave switching technology, which relies on photoconduction to achieve microwave switching. Photoconductivity is an increase in conductivity with illumination. Thus prior art optoelectronic switches rely on a change in the device resistance to effect the switching function.

Prior art optoelectronic microwave switches can be classified according to the means of operation. Plasma switches work by forming a highly conductive plasma in the electrical path of a microwave transmission line. The plasma-forming semiconductor material can be placed as a shunt element, a series element or both. See Platte "Optoelectronic Microwave Switching", IEEE Proceedings, Volume 132, No. 2, pp. 126-132, April 1985.

It has also been proposed to use light of two different wavelengths to turn on and off a plasma switch constructed as a simple gap in a microstrip transmission line on a semiconductor substrate. One wavelength of light is absorbed in the surface of the semiconductor and forms a conducting plasma across the microstrip gap allowing RF transmission. The other wavelength penetrates deep into the semiconductor, forming a conducting plasma to ground which reflects the incident RF energy. For more information on this technique, see A.M. Johnson, D.H. Auston, "Microwave Switching By Picosecond Photoconductivity", IEEE - QE, Volume QE-11, No. 6, pp. 283-287, June 1975.

Plasma switches turn on very rapidly (10-100 ps) but turn off very slowly (1 $\mu$s-1 ms) because there is no electric field present to sweep away carriers. The turnoff time is determined by carrier recombination unless some means of shunting is used as described above. A second disadvantage of the plasma switch is the requirement for a high-powered laser to form a plasma over a large region or surface.

Avalanche photodiode switches have been used as microwave switches because of their high photoconductivity. The diode is typically biased near avalanche breakdown, where a small amount of illumination causes ionization in the high field region. The electron-hole pairs in turn ionize other atoms creating large photocurrents through multiplication. For more information on this effect, see the above mentioned publication by R.A. Kiehl. Avalanche photodiodes switch comparatively slow because the avalanche process takes time to build. Also, they are noisy and can have thermal problems.

Bias controlled optoelectronic switches represent a whole class of switches which use bias control to turn optical detectors on and off. For instance, a photodiode can switch on and off the detected microwave modulated illumination from a laser by transitioning from reverse to forward bias, respectively. In other words, photodiode detectors only function in reverse bias. When they are switched to forward bias, they will not detect amplitude modulated microwave energy on an optical carrier. In a similar way, an avalanche photodiode can be turned on and off by switching the bias in and out of avalanche. Bias controlled optoelectronic switches thus rely on changes in bias in order to switch. As a result, this type of switch has the same speed as a conventional PIN diode switch (on the order of 10 ns).

A gold-type GaAs surface barrier diode is described in T. Yamamoto and Y. Ota, "The Gold *n*-Type GaAs Surface Barrier Diode and its Application to Photocapacitors", Solid State Electronics, Vol. 11, No. 2 (1968.2), pp. 219-224. The gold-coated diode discussed in this document is sensitive to illumination and changes its capacitance in dependence thereof. It is used in oscillator - however, without being biased -, and changes the oscillator's frequency.

According to the present invention, a variable voltage is provided to reverse-bias the diode junction to thereby control the operating frequency of the microwave switch, mentioned at the outset. Thus, the microwave switch/ modulator is electronically tuneable so that the microwave frequency of operation can be varied by adjusting the reverse bias voltage to the photodiode.

The microwave switch according to the present invention can switch or modulate microwave signals at a factor 10-1000 times faster than conventional bias controlled microwave switches such as PIN diodes. The invention employs an optically controlled diode which uses changes in diode reactance, rather than resistance, as a mechanism to switch or modulate microwave energy. The optically controlled switch of the invention also enjoys complete isolation between the control circuitry (pulse modulator for the laser) and the microwave switching circuitry, so that no undesirable interference or transients can be coupled into the switched signal. The invention is thus useful in a wide range of high-speed RF and microwave switching applications, including EW receiver blanking switches for applications where a wide bandwidth tuneability can be employed for selectively receiving and nulling jamming signals. The invention is also useful for analog modulator applications where an intensity modulated optical signal can be used to amplitude modulate a microwave signal. The range of applications of the invention includes radar, EW, RF and microwave communications, and signal processing.

In the drawings,

Fig. 1 is a cross-sectional view of a photoreactive diode showing a plasma region formed by laser illumination and a depletion region created by reverse biasing the device;

Fig. 2 is a simplified cross-sectional view of a photoreactive diode with regions defined;

Fig. 3 is a graph depicting absorption coefficient versus wavelength of illumination for a semiconductor;

Fig. 4 is a graph depicting conductivity versus depth from the surface of the semiconductor;

FIG. 5(a) is a Smith chart plot of measured reflection coefficients for an unilluminated photodiode with 8 volts bias;

FIG. 5(b) is a schematic diagram depicting a model of photodiode developed from the S-parameters;

FIG. 6 is a Smith coefficient at 8 GHz due to illumination by a 2mW, $0.833\mu$m laser for two different bias voltages;

FIG. 7(a) is a schematic diagram of a resonant impedance matching circuit required in conjunction with the invention;

FIG. 7(b) is a layout of the circuit of FIG. 7(a) on microstrip substrate;

FIG. 8(a) is a graph depicting the return loss versus frequency of a switch using the impedance matching circuit of FIG. 7(a) showing tuning effect of reverse bias voltage;

FIG. 8(b) is a graph depicting frequency of peak return loss versus bias voltage showing saturation as the photodiode punches through;

FIG. 9 is a graph depicting return loss versus frequency of a photodiode illiminatied with a 2mW, $0.33\mu$m laser and further showing the illuminated and unilluminated states;

FIG. 10(a) is a schematic block diagram of the reflection/absorbtion switch using a circulator to separate the input and output signals;

FIG. 10(b) is a graph depicting isolation/insertion loss versus frequency, showing actual switch performance for two bias voltages; and

FIGS. 11a and 11b are schematic block diagrams of a photoreactive diode employed in two different two-port transmission/reflection switching schemes.

## DESCRIPTION OF THE PREFERRED EMBODIMENTS

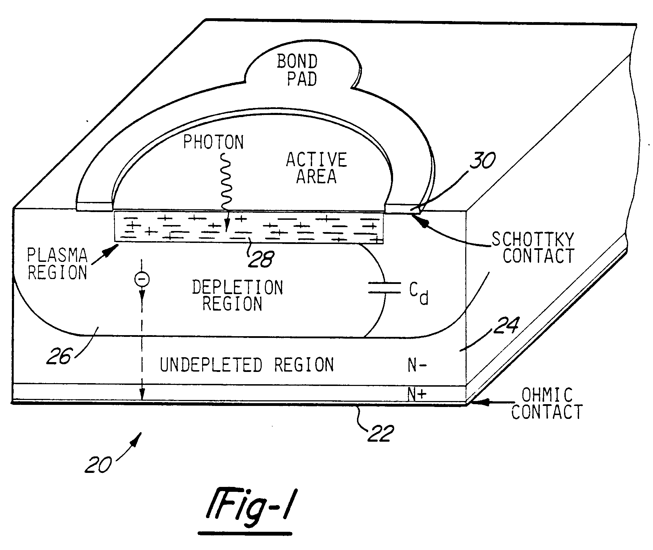

The present invention employs a mechanism in which the reactance of the photodiode varies with illumination. This mechanism will be hereinafter referred to as the "photoreactive effect". Photoreactance is caused by the formation of a plasma on the surface of a photodiode resulting from photons colliding with atoms (ionization) in the active region of the device. With reference to FIGS. 1 and 2, the photoreactive diode 20 comprises ohmic contact 22, undepleted region 24, depletion region 26, plasma region 28 and a Schottky contact ring 30. The thickness of the plasma region, $t_p$, increases with illumination on the photodiode. A depletion region of thickness, $t_d$, is formed in a reversed biased diode.

The capacitance of the photodiode can be approximated by the simple parallel plate model as:

$$c_d = \frac{\varepsilon A}{t_d - t_p} \qquad (1)$$

Where A is the active area of the photodiode.

This equation shows that increasing the plasma thickness by increasing the illumination causes the photodiode capacitance to rise.

The depletion thickness as a function of the reverse bias voltage for a Schottky diode is given by:

$$t_d = \frac{2}{qN_d}\left(Vd1 - Vd - \frac{kT}{q}\right) \qquad (2)$$

where: $N_d$ = donor impurity density, $V_{bl}$ = built in potential, $V_d$ = reverse bias voltage, and T = temperature. This equation demonstrates that the depletion width increases with bias voltage. Therefore, the maximum photoreactive effect occurs at voltages where the depletion thickness is only slightly larger than the plasma thickness such that $t_d$ - $t_p$ is small.

A photon is absorbed in a semiconducting material creating an electron-hole pair if its energy is greater than or equal to the band gap, $E_g$, i.e.,

$$h\nu > E_g, \text{ where } \nu = c/\lambda \qquad (3)$$

Therefore, there is a critical wavelength of illumination above which there is transmission and below which there is absorption of photons, i.e.,

$$\lambda_c = \frac{h_c}{E_g} = \frac{1.24}{E_g} \qquad (4)$$

As a result, for this invention to function, absorption of photons must occur using illumination at wavelengths less than the critical wavelength, $\lambda < \lambda_c$.

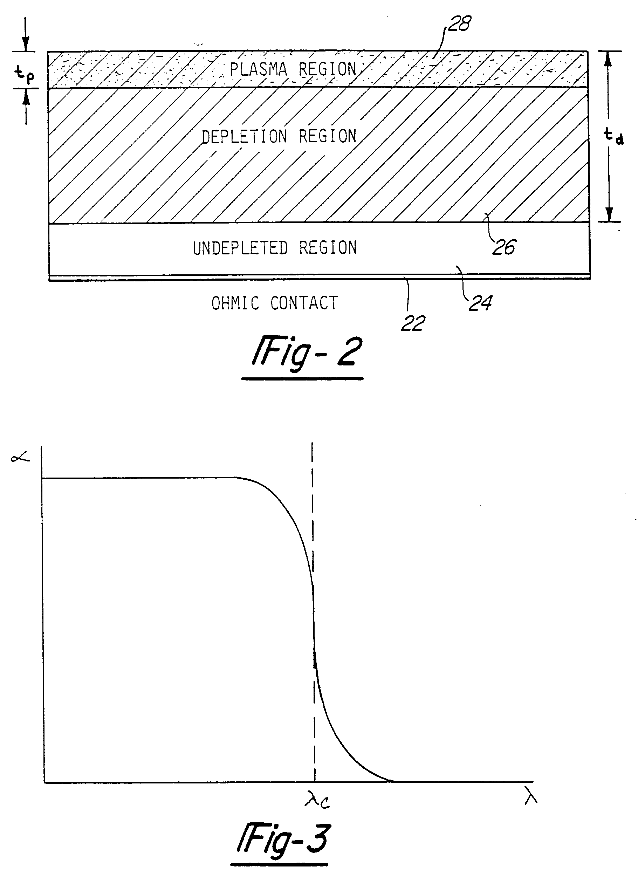

The absorption coefficient, $\alpha$, is a measure of the degree to which a semiconductor absorbs photons and is, of course, a function of wavelength, as shown in FIG. 3.

The distribution of electron-hole pairs created by illumination of a semiconductor is given by,

$$N(x) = N_o e^{-\alpha x} \qquad (5)$$

where $N_o$ is the surface carrier density. Therefore, $\theta$, the conductivity as a function of depth from the surface of the semiconductor is given by,

$$\Theta(x) = qN(x)(Mn+M) = qN_o(\mu_n+\mu_p)e^{-\alpha x}$$

$$\qquad (6)$$

$$= \Theta_o(I) \cdot e^{-\alpha x}$$

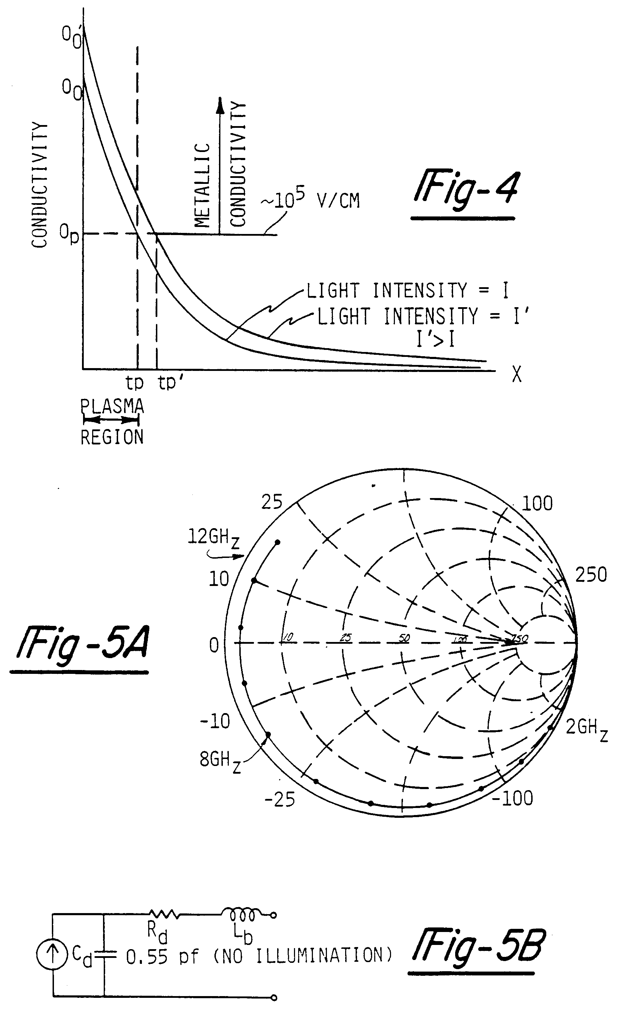

where $\theta_o$ (I) is the surface conductivity which is a function of the illumination intensity. The conductivity versus depth is plotted in FIG. 4 for two different illumination levels. The exponential conductivity distribution can be approximated by a rectangular distribution as depicted by the dotted line in FIG. 4 of conductivity $\theta_p$ and thickness $t_p$. The effective plasma thickness is defined as a region of approximately metallic conductivity, where $\theta_p$ is on the order of $10^5$ mhos/cm or greater. From equation (6), the effective plasma thickness is,

$$t_p = \alpha^{-1} \ln [\theta_o(I)/\theta_p] \qquad (7)$$

Substituting equations (7) and (2) into (1) gives an approximate expression for the photodiode capacitance as a function of the bias voltage and illumination.

$$C_d = \frac{\varepsilon A}{(2\varepsilon/qN_d)(V_{b1} - V_d - kT/q) - \alpha^{-1}\ln[\theta o(I)/\theta p]} \qquad (8)$$

Equation (8) shows that the capacitance increases with increasing illumination and decreasing bias voltage. The capacitance becomes very large as $t_p$ approaches $t_d$. When $t_p = t_d$ the denominator of equations (1) and (8) go to zero and the capacitance goes to infinity. This occurs when the plasma region spans the depletion region. In this case, there will be a large change in the resistance, as well as the reactance, of the photodiode.

To the first order, the depletion width is not affected by the presence of the plasma, since the plasma is charge neutral -- containing as many holes as electrons. The equilibrium density of carriers within the plasma region is determined by the rate at which electrons and holes are created, the rate at which they drift and diffuse, and their recombination times. Electrons and holes are separated and carried by the electric field present in the depletion region. The electrons are carried across the depletion region creating an external photocurrent while the holes move in the opposite direction and are immediately collected at the Schottky contact. The space charge of the electrons travelling through the drift region will depress the electric field, but this is considered a second order effect and is neglected.

The measured reflection coefficients ($S_{11}$) as a function of frequency for an unilluminated 50$\mu$m diameter, GaAs, Schottky photodiode are plotted on the Smith chart of FIG. 5A. The S-parameter data is fitted to the model of FIG. 5B where $C_d$ is the depletion capacitance, $R_d$ is the contact resistance and $L_b$ is the bond wire inductance.

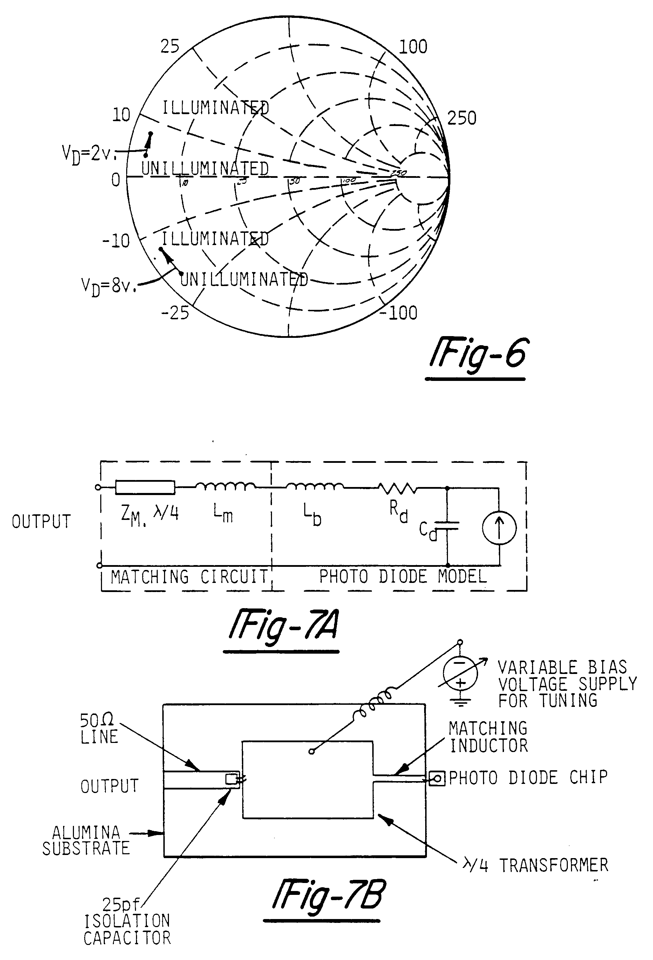

Illuminating the active area of the photodiode with 2mW of optical energy from a miniature GaAlAs laser diode causes the reflection coefficient at 8 GHz to slightly shift, as shown in FIG. 6. The change in the $S_{11}$ is purely reactive and corresponds to an increase in the depletion capacitance from 0.52 pF to 0.59 pF with illumination for 8 volts bias. With 2 volts bias the capacitance changes from 1.47 pF to 1.81 pF with illumination. There is a larger change in junction capacitance at 2 volts bias than at 8 volts bias (23% versus 7.3%) This is due to the fact that the depletion width is much narrower at 2 volts bias than at 8 volts bias.

A simple microwave matching circuit was designed and fabricated which matches 50 Ohms to the impedance of the unilluminated diode at 8 GHz. The matching circuit consisted of a series inductor and a quarter wavelength impedance transformer, as shown in FIG. 7a. The series inductor is chosen to resonate the unilluminated capacitance of the photodiode, $C_{du}$, at 8 GHz.

$$L_m = \frac{1}{w^2 C_{du}} - L_b = 0.24nH. \qquad (9)$$

$L_m$ eliminates the reactie part of the photodiode impedance leaving the real part, $R_d$. $R_d$ is matched to 50 Ohms using a standard quarter wavelength transformer of impedance, $Z_m$, where

$$Z_m = 50 * Rd = 12 \text{ Ohms} \qquad (10)$$

A transformer of such low impedance can be conveniently realized on microstrip using a thin substrate of high dielectric constant. For these reasons, 0,254 mm (10 mil) thick aluminum is chosen. The series matching inductor is realized on microstrip as a short section of high impedance transmission line. A layout of the circuit is shown in FIG. 7b. Other two-element matching circuits are also suitable for this application. These matching circuits may be realized on other microwave transmission media such as coaxial line, waveguide and strip-line.

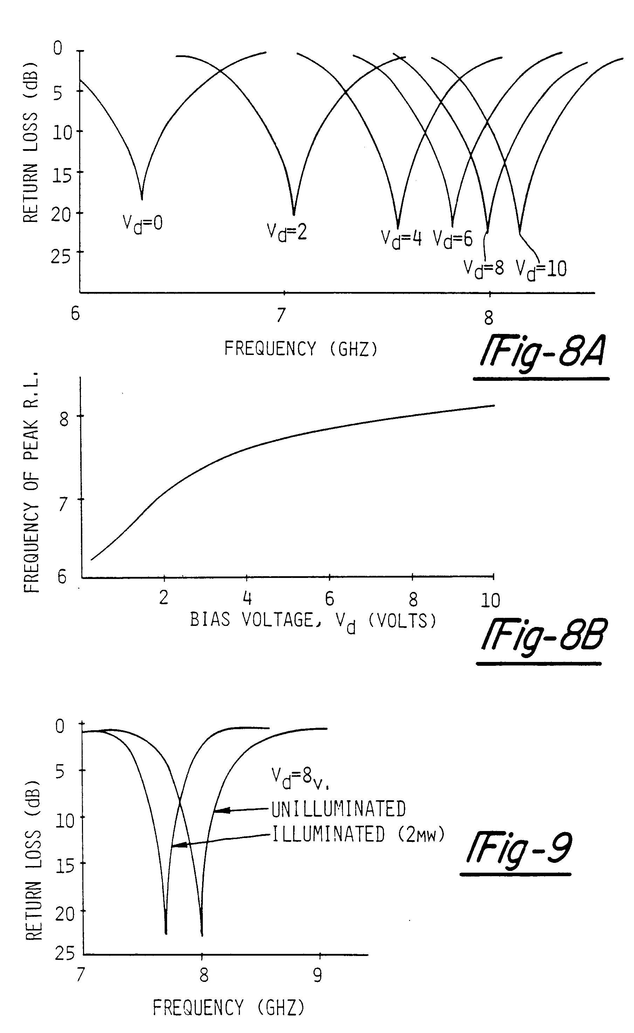

The impedance matching circuit is designed to give a high return loss of its input over a narrow band about the center frequency (8 GHz). The center frequency at which the return loss peaks can be varied by adjusting the reverse bias to the photodiode. The tuning arises from the variation of the depletion capacitance with bias voltage as given by equation (9). A plot of return loss versus frequency for several reverse bias voltages is shown in FIG. 8a. The frequency at which the return loss peak occurs as a function of bias voltage is plotted in FIG. 8b. Notice that the frequency levels off at higher bias voltages as the diode punches through.

Illuminating the diode also causes the junction capacitance to vary, as described above. FIG. 9 shows the return loss versus frequency for an illuminated (using a GaAlAs laser of $0.833\mu$m wavelength) and unilluminated photodiode with 8 volts bias. The resonant frequency shifts by 300 MHz corresponding in a change in $C_d$ from 0.55 pF in the unilluminated state to 0.59 pF in the illuminated state. The increase in capacitance is attributed to the formation of a plasma region in the diode, as described above.

Since the wavelength of the GaAlAs laser optical control signal ($0.833\mu$m) is slightly shorter than the critical wavelength of the GaAs photodiode (0.900um), photons are absorbed in the photodiode to create a plasma, as described by equation (4).

FIG. 9 shows that the return loss at 8 GHz can be made to vary from 25 dB to 3 dB simply by illuminating the photodiode with 2mW of optical power. The light is directed to the active area of the photodiode by an optical fiber.

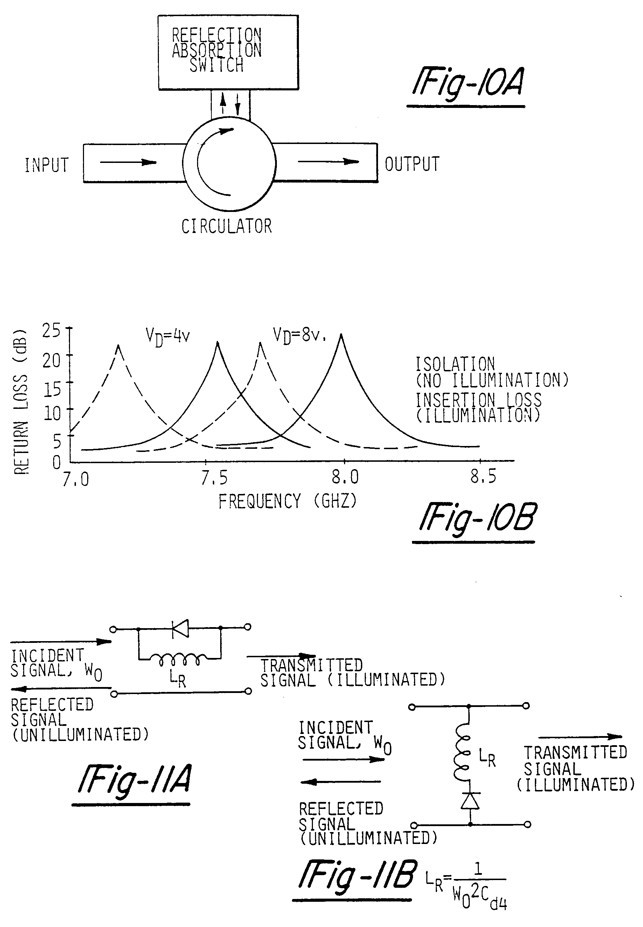

The circuit can be made into a useful switch by connecting a circulator on the input (see FIG. 10a). When the return loss off of the circuit is high, the incident energy is absorbed and the switch is in the high isolation state. When the return loss is low, incident energy is reflected and the device is in the low insertion loss state. The performance of the switch at two diferent bias voltages is shown in FIG. 10b. Notice that the frequency shift due to illumination is much greater for smaller reverse bias voltages, as explained by equation (8).

Even though the invention is inherently narrow banded (5%), the center frequency of operation can be electronically tuned over a 25% band width by varying the reverse bias voltage. The invention has demonstrated operation at X-band, although it is theoretically possible to design a photoreactive switch/modulator which functions at MMW frequencies.

This invention switches states on the order of 10 pS, which is the time it takes to form the conducting plasma. The turn off time is determined by the time it takes for the plasma to recombine, diffuse, or be swept away by the electric field. The advantage of this switch is that the plasma is formed in a high electric field region so that most of the carriers are rapidly swept away when the illumination is stopped. Other plasma switches operated by photoconductive described in technical journals form plasmas in bulk semiconductors with no electric field to sweep away carriers. The turn off time for other plasma switches is determined by the recombination time of the carriers.

This invention can use a low power laser to generate the optical control pulses or modulation. A laser is a threshold device -- when the bias current exceeds some threshold value it begins to lase almost instantaneously. The Ortel Corporation laser may be used to switch the invention off and on at picosecond speeds. Test equipment does not exist which permits the measurement of such fast picosecond pulses. Instead, we determined the switching speed of the device by modulating the laser control signal with a sine wave at X-band frequencies. The photodiode responded to X-band optical control signals indicating a switching speed on the order of 10pS, which is a factor of 1000 improvement over a conventional PIN diode switch.

Of particular interest for some practical applications is a two-port transmission/reflection switch using a photoreactive diode rather than the one-port reflection/absorption switch described above. The former does not require a circulator to separate the input and output signals and can be used to switch higher power RF energy. Schematically, two-port switches could be fabricated as shown in FIG. 11. The two schemes function by detuning a high Q resonant circuit when the photodiode is illuminated. The resonant circuit is formed by the unilluminated photodiode capacitance, $C_{du}$, and a resonant circuit inductance, $L_R$. $L_R$ is chosen according to,

$$L_R = \frac{1}{\omega_o^2 C_{du}} \qquad (11)$$

where $\omega_o$ is the operating frequency of the switch. Both switches reflect incident microwave signals at frequency $\omega_o$ when the photodiode is unilluminated. When illuminated, the resonant circuit is detuned allowing the signal to be transmitted. The design procedure and functioning of the switch is basically the same as described above.

While the invention has been described in connection with a gallium arsenide (GaAs) semiconductor, for 0.8 $\mu$m wavelength illumination, the invention may be practiced with other semiconductor materials as well. In general, the semiconductor material is chosen to suit the particular wavelength illumination. Suitable materials include: silicon (Si), germanium arsenide (GeAs) and gallium arsenide (GaAs) for 0.8 $\mu$m illumination; indium gallium arsenide (In GaAs) and indium arsenide phosphate (In GaAsP) for 1.3 $\mu$m illumination; and indium gallium arsenide (InGaAs) for 1.55 $\mu$m illumination.

From the foregoing, it will be understood that the present invention provides a microwave switch/modulator which employs the photoreactive mechanism to switch at ultra-high speed. The invention is applicable to a wide range of frequencies including, microwave, RF, and MMW frequencies.

**Claims**

1. Microwave switch comprising:
   - a semiconductor material (24, 26) defining a diode junction;
   - a photoactive region on said semiconductor material (26), the reactance of said photoactive region being variable with optical illumination;
   - a source of optical illumination directed toward said photoactive region to form a plasma region (28) adjacent to said photoactive region;
   characterized by a variable voltage supply to reverse-bias said diode junction to thereby control the operating frequency of said microwave switch.

2. Microwave switch according to claim 1, characterized in that said variable voltage source establishes a depleted region (26) and an undepleted region (24).

3. Microwave switch according to claim 1 or 2, wherein the depth of said plasma region (28) is variable in relation to the energy of said optical illumination received by said photoactive region.

4. Microwave switch according to claim 3, characterized in that the reactance of said diode junction is variable with the depth of said plasma region (28).

5. Microwave switch according to any of the preceding claims, characterized in that said source of optical illumination is a controllable source.

6. Microwave switch according to any of the preceding claims, characterized by
   - means for inserting said diode junction in an electromagnetic signal path, wherein said electromagnetic signal may be switched by controlling said source of optical illumination; and
   - a resonant circuit coupled to said diode junction for being selectively detuned when said photoactive region is illuminated.

7. Microwave switch according to claim 6, characterized in that said resonant circuit is an impedance matching circuit ($Z_M$, $L_m$) coupled to said diode junction for substantially negating and resonating the reactance of said diode junction when said photoactive area is unilluminated.

8. Microwave switch according to claim 7, characterized in that said impedance matching circuit ($Z_M$, $L_m$) transforms the diode junction reactance to a system impedance of nominally fifty ohms.

9. Microwave switch according to claim 7 or 8, characterized in that said impedance matching circuit ($Z_M$, $L_m$) and said diode junction define a one-port reflection/absorption switch.

10. Microwave switch according to any of the preceding claims, characterized in that said semiconductor material (24, 26) includes at least one ohmic contact (22).

11. Microwave switch according to any of the preceding claims, characterized in that said semiconductor material (24, 26) includes at least one Schottky contact (30).

12. Microwave switch according to any of the preceding claims, characterized in that said semiconductor material (24, 26) is selected from the group consisting of silicon, gallium arsenide, germanium arsenide, indium gallium arsenide, and indium gallium arsenide phosphate.

13. Microwave switch according to any of the preceding claims, characterized in that said source of optical illumination is a laser.

14. Microwave switch according to any of the preceding claims, characterized by a circulator for providing separate input and output ports to said diode junction.

15. Microwave switch according to any of the preceding claims, characterized by a resonating inductance ($L_R$) coupled to said diode junction to define a two-port transmission/reflection switch.

16. Microwave modulator, characterized in that it includes a microwave switch according to at least one of claims 6 through 15, and wherein modulation of said source of optical illumination causes a microwave signal fed to said diode junction to be amplitude modulated.

17. Method for altering, in particular switching or modulating, electromagnetic signals including the steps of:
   - delivering said electromagnetic signals to a photoreactive material constituted by a semiconductor material (24, 26) defining a diode junction and a photoactive region on the semiconductor material (26), the reactance of said photoactive region being variable with optical illumination;
   - illuminating said photoactive region with a source of optical illumination to form a plasma region (28) adjacent to said photoactive region;
   characterized by the step of
   - feeding a variable voltage supply signal to said diode junction to reverse-bias said diode junction and thereby controlling the operating frequency of said electromagnetic signals.

18. Method according to claim 17, characterized by the step of
   - controlling said source of optical illumination.

19. Method according to claim 17 or claim 18, characterized by the step of
   - coupling a resonant circuit to said diode junction for selectively detuning said diode junction when said photoactive region is illuminated.

20. Method according to any of claims 17 through 19, characterized by the step of
   - selecting said semiconductor material (24, 26) from the group consisting of silicon, gallium arsenide, germanium arsenide, indium gallium arsenide, and indium gallium arsenide phosphate.

21. Method according to any of claims 17 through 20, characterized by the step of
   - connecting a circulator to said diode junction, in order to provide separate input and output ports to said diode junction.

22. Method according to any of claims 17 through 21, characterized by the step of
   - coupling a resonating inductance ($L_R$) to said diode junction to define a two-port transmission/reflection switch.

## Patentansprüche

1. Mikrowellenschalter, mit:
   - einem einen Diodenübergang definierenden Halbleitermaterial (24, 26),
   - einer photoaktiven Region auf dem Halbleitermaterial (26), wobei die Reaktanz der photoaktiven Region durch optische Beleuchtung veränderbar ist,
   - einer Quelle auf die photoaktive Region gerichteter optischer Beleuchtung, um neben der photoaktiven Region eine Plasmaregion (28) zu erzeugen,
   gekennzeichnet durch eine veränderbare Spannungsversorgung, um den Diodenübergang in Sperrichtung zu betreiben und dadurch die Betriebsfrequenz des Mikrowellenschalters zu steuern.

2. Mikrowellenschalter nach Anspruch 1, dadurch gekennzeichnet, daß die veränderbare Spannungsversorgung eine verarmte Region (26) und eine verarmungsfreie Region (24) hervorruft.

3. Mikrowellenschalter nach Anspruch 1 oder 2, bei dem die Tiefe der Plasmaregion (28) in Abhängigkeit von der Energie der optischen Beleuchtung veränderbar ist, die von der photoaktiven Region empfan-

EP 0 298 098 B1

gen wird.

4. Mikrowellenschalter nach Anspruch 3, dadurch gekennzeichnet, daß die Reaktanz des Diodenüberganges mit der Tiefe der Plasmaregion (28) veränderlich ist.

5. Mikrowellenschalter nach einem der vorhergehenden Ansprüche, dadurch gekennzeichnet, daß die Quelle optischer Beleuchtung eine steuerbare Quelle ist.

6. Mikrowellenschalter nach einem der vorhergehenden Ansprüche, gekennzeichnet durch
   - Mittel zum Einfügen des Diodenüberganges in einen Pfad eines elektromagnetischen Signales, wobei das elektromagnetische Signal durch Steuerung der Quelle optischer Beleuchtung geschaltet werden kann, und
   - einen Resonanzkreis, der an den Diodenübergang gekoppelt ist, um selektiv verstimmt zu werden, wenn die photoaktive Region beleuchtet ist.

7. Mikrowellenschalter nach Anspruch 6, dadurch gekennzeichnet, daß der Resonanzkreis eine Impedanzanpassungsschaltung ($Z_M$, $L_m$) ist, die an den Diodenübergang gekoppelt ist, um im wesentlichen die Reaktanz des Diodenüberganges zu negieren und in Resonanz schwingen zu lassen, wenn das photoaktive Gebiet nicht beleuchtet ist.

8. Mikrowellenschalter nach Anspruch 7, dadurch gekennzeichnet, daß die Impedanzanpassungsschaltung ($Z_M$, $L_m$) die Reaktanz des Diodenüberganges auf eine Systemimpedanz von nominal fünfzig Ohm transformiert.

9. Mikrowellenschalter nach Anspruch 7 oder 8, dadurch gekennzeichnet, daß die Impedanzanpassungsschaltung ($Z_M$,$L_m$) und der Diodenübergang einen Reflektions-/Absorptionsschalter mit einem Eingang definieren.

10. Mikrowellenschalter nach einem der vorhergehenden Ansprüche, dadurch gekennzeichnet, daß das Halbleitermaterial (24, 26) wenigstens einen Ohmschen Kontakt (22) umfaßt.

11. Mikrowellenschalter nach einem der vorhergehenden Ansprüche, dadurch gekennzeichnet, daß das Halbleitermaterial (24, 26) wenigstens einen Schottky-Kontakt (30) umfaßt.

12. Mikrowellenschalter nach einem der vorhergehenden Ansprüche, dadurch gekennzeichnet, daß das Halbleitermaterial (24, 26) ausgewählt ist aus der aus Silizium, Gallium-Arsenid, Germanium-Arsenid, Indium-Gallium-Arsenid und Indium-Gallium-Arsenid-Phosphat bestehenden Gruppe.

13. Mikrowellenschalter nach einem der vorhergehenden Ansprüche, dadurch gekennzeichnet, daß die Quelle optischer Beleuchtung ein Laser ist.

14. Mikrowellenschalter nach einem der vorhergehenden Ansprüche, gekennzeichnet durch einen Zirkulator, um getrennte Eingangs- und Ausgangstore zu dem Diodenübergang bereitzustellen.

15. Mikrowellenschalter nach einem der vorhergehenden Ansprüche, gekennzeichnet durch eine in Resonanz schwingende Induktivität ($L_R$), welche an den Diodenübergang gekoppelt ist, um einen Transmissions-/Reflektionsschalter mit Zwei Eingängen zu definieren.

16. Mikrowellenmodulator, dadurch gekennzeichnet, daß er einen Mikrowellenschalter nach wenigstens einem der Ansprüche 6 bis 15 umfaßt, und bei dem die Modulation der Quelle optischer Beleuchtung es bewirkt, daß ein dem Diodenübergang zugeführtes Mikrowellensignal amplitudenmoduliert wird.

17. Verfahren zum Verändern, insbesondere Schalten oder Modulieren elektromagnetischer Signale, mit den Schritten:
    - Liefern der elektromagnetischen Signale zu einem photoreaktiven Material, das durch ein einen Diodenübergang definierendes Halbleitermaterial (24, 26) und eine photoaktive Region auf dem Halbleitermaterial (26) definiert ist, wobei die Reaktanz der photoaktiven Region durch optische Beleuchtung veränderbar ist,

10

- Beleuchten der photoaktiven Region mit einer Quelle optischer Beleuchtung, um neben der photoaktiven Region eine Plasmaregion (28) zu bilden,

gekennzeichnet durch den Schritt

- Zuführen eines veränderbaren Spannungsversorgungssignales zu dem Diodenübergang, um den Diodenübergang in Sperrichtung zu betreiben und dadurch die Betriebsfrequenz der elektromagnetischen Signale zu steuern.

18. Verfahren nach Anspruch 17, gekennzeichnet durch den Schritt
- Steuern der Quelle optischer Beleuchtung.

19. Verfahren nach Anspruch 17 oder Anspruch 18, gekennzeichnet durch den Schritt
- Koppeln eines Resonanzkreises an den Diodenübergang, um den Diodenübergang selektiv zu verstimmen, wenn die photoaktive Region beleuchtet ist.

20. Verfahren nach einem der Ansprüche 17 bis 19, gekennzeichnet durch den Schritt
- Auswählen des Halbleitermaterials (24, 26) aus der aus Silizium, Gallium-Arsenid, Germanium-Arsenid, Indium-Gallium-Arsenid und Indium-Gallium-Arsenid-Phosphat bestehenden Gruppe.

21. Verfahren nach einem der Ansprüche 17 bis 20, gekennzeichnet durch den Schritt
- Verbinden eines Zirkulators mit dem Diodenübergang, um getrennte Eingangs- und Ausgangstore zu dem Diodenübergang bereitzustellen.

22. Verfahren nach einem der Ansprüche 17 bis 21, gekennzeichnet durch den Schritt
- Koppeln einer in Resonanz schwingenden Induktivität ($L_R$) an den Diodenübergang, um einen Transmissions-/Reflektionsschalter mit zwei Eingängen zu definieren.

**Revendications**

1. Elément de commutation micro-onde comprenant:
- un matériau semiconducteur (24, 26) définissant une jonction de diode;
- une région photoactive sur le matériau semiconducteur (26), cette région photoactive ayant une réactance qui varie en fonction de l'illumination optique;
- une source d'illumination optique dirigée vers la région photoactive pour former une région de plasma (28) adjacente à la région photoactive;

caractérisé par une source de tension variable pour polariser en inverse la jonction de diode, pour commander ainsi la fréquence de fonctionnement de l'élément de commutation micro-onde.

2. Elément de commutation micro-onde selon la revendication 1, caractérisé en ce que la source de tension variable établit une région désertée (26) et une région non désertée (24).

3. Elément de commutation micro-onde selon la revendication 1 ou 2, dans lequel la profondeur de la région de plasma (28) est variable en fonction de l'énergie de l'illumination optique que reçoit la région photoactive.

4. Elément de commutation micro-onde selon la revendication 3, caractérisé en ce que la réactance de la jonction de diode est variable avec la profondeur de la région de plasma (28).

5. Elément de commutation micro-onde selon l'une quelconque des revendications précédentes, caractérisé en ce que la source d'illumination optique est une source commandée.

6. Elément de commutation micro-onde selon l'une quelconque des revendications précédentes, caractérisé par :
- des moyens pour insérer la jonction de diode dans un chemin de signal électromagnétique, ce signal électromagnétique pouvant être commuté par la commande de la source d'illumination optique; et
- un circuit résonnant couplé à la jonction de diode pour être désaccordé sélectivement lorsque la région photoactive est illuminée.

**7.** Elément de commutation micro-onde selon la revendication 6, caractérisé en ce que le circuit résonnant est un circuit d'adaptation d'impédance ($Z_M$, $L_m$) qui est couplé à la jonction de diode pour annuler et faire résonner pratiquement la réactance de la jonction de diode lorsque la région photoactive n'est pas illuminée.

**8.** Elément de commutation micro-onde selon la revendication 7, caractérisé en ce que le circuit d'adaptation d'impédance ($Z_M$, $L_m$) transforme la réactance de la jonction de diode en une impédance de système d'une valeur nominale de 50 ohms.

**9.** Elément de commutation micro-onde selon la revendication 7 ou 8, caractérisé en ce que le circuit d'adaptation d'impédance ($Z_M$, $L_m$) et la jonction de diode définissent un élément de commutation à réflexion/absorption à un seul accès.

**10.** Elément de commutation micro-onde selon l'une quelconque des revendications précédentes, caractérisé en ce que le matériau semiconducteur (24, 26) comprend au moins un contact ohmique (22).

**11.** Elément de commutation micro-onde selon l'une quelconque des revendications précédentes, caractérisé en ce que le matériau semiconducteur (24, 26) comprend au moins un contact Schottky.

**12.** Elément de commutation micro-onde selon l'une quelconque des revendications précédentes, caractérisé en ce que le matériau semiconducteur (24, 26) est sélectionné dans le groupe qui comprend le silicium, l'arséniure de gallium, l'arséniure de germanium, l'arséniure d'indium-gallium et l'arséniure-phosphure d'indium-gallium.

**13.** Elément de commutation micro-onde selon l'une quelconque des revendications précédentes, caractérisé en ce que la source d'illumination optique est un laser.

**14.** Elément de commutation micro-onde selon l'une quelconque des revendications précédentes, caractérisé par un circulateur qui est destiné à établir des accès d'entrée et de sortie séparés pour la jonction de diode.

**15.** Elément de commutation micro-onde selon l'une quelconque des revendications précédentes, caractérisé par une inductance résonnante ($L_R$) couplée à la jonction de diode pour définir un élément de commutation à transmission/réflexion à deux accès.

**16.** Modulateur micro-onde, caractérisé en ce qu'il comprend un élément de commutation micro-onde selon l'une au moins des revendications 6 à 15, et dans lequel la modulation de la source d'illumination optique a pour effet de moduler en amplitude un signal micro-onde qui est appliqué à la jonction de diode.

**17.** Procédé pour modifier, en particulier commuter ou moduler, des signaux électromagnétiques, comprenant les étapes suivantes :
- on applique les signaux électromagnétiques à un matériau photoréactif constitué par un matériau semiconducteur (24, 26) définissant une jonction de diode et une région photoactive sur le matériau semiconducteur (26), cette région photoactive ayant une réactance qui varie avec l'illumination optique;
- on illumine la région photoactive avec une source d'illumination optique pour former une région de plasma (28) adjacente à la région photoactive;

caractérisé par l'étape suivante :
- on applique un signal de source de tension variable à la jonction de diode, pour polariser en inverse cette jonction de diode, et pour commander ainsi la fréquence de fonctionnement des signaux électromagnétiques.

**18.** Procédé selon la revendication 17, caractérisé par l'étape suivante :
- on commande la source d'illumination optique.

**19.** Procédé selon la revendication 17 ou 18, caractérisé par l'étape suivante :

- on couple un circuit résonnant à la jonction de diode pour désaccorder sélectivement cette jonction de diode lorsque la région photoactive est illuminée.

20. Procédé selon l'une quelconque des revendications 17 à 19, caractérisé par l'étape suivante :
- on sélectionne le matériau semiconducteur (24, 26) dans le groupe qui comprend le silicium, l'arséniure de gallium, l'arséniure de germanium, l'arséniure d'indium-gallium et l'arséniure-phosphure d'indium-gallium.

21. Procédé selon l'une quelconque des revendications 17 à 20, caractérisé par l'étape suivante :
- on connecte un circulateur à la jonction de diode, dans le but d'établir des accès d'entrée et de sortie séparés pour la jonction de diode.

22. Procédé selon l'une quelconque des revendications 17 à 21, caractérisé par l'étape suivante :
- on couple une inductance résonnante ($L_R$) à la jonction de diode pour définir un élément de commutation à transmission/réflexion à deux accès.

BOND
PAD

PHOTON

ACTIVE
AREA

30

PLASMA
REGION

28

DEPLETION
REGION

$C_d$

SCHOTTKY
CONTACT

24

26

UNDEPLETED REGION

N−

N+

OHMIC
CONTACT

22

20

*Fig-1*

$t_p$

*28*

PLASMA REGION

DEPLETION REGION

$t_d$

UNDEPLETED REGION

*26*

OHMIC CONTACT

*24*

*22*

*Fig-2*

$\alpha$

$\lambda_c$

$\lambda$

*Fig-3*

*Fig-4*

*Fig-5A*

*Fig-5B*

*Fig-6*

*Fig-7A*

*Fig-7B*

*Fig-8A*

*Fig-8B*

*Fig-9*

*Fig-10A*

*Fig-10B*

*Fig-11A*

*Fig-11B* $L_R = \dfrac{1}{W_0{}^2 C_{d4}}$